# EUROPEAN PATENT SPECIFICATION

(11) **EP 2 386 208 B1**
(45) Date of publication and mention of the grant of the patent: **22.07.2015**
(21) Application number: 10162821.2
(22) Date of filing: 14.05.2010
(51) Int. Cl.: A23G 1/00, A23G 3/00, A23G 1/54

(54) **Method for manufacturing a multi-layered confectionary shell**
Verfahren zur Herstellung einer mehrschichtigen Konfektschale
Procédé de fabrication d'une coque de confiserie multicouches

(43) Date of publication of application: 16.11.2011
(73) Proprietor: Kraft Foods R & D, Inc., Deerfield, IL 60015 (US)
(72) Inventor: Gustav, Thorsten, 85636, Höhenkirchen-Siegertsbrunn (DE); Bauer, Sandra, 81669, Munich (DE); Schulz, Michael, 81737, Munich (DE)
(74) Representative: Hoffmann Eitle

(56) References cited:
- EP-A1- 0 589 820
- EP-A1- 1 110 459
- EP-A1- 1 604 573
- EP-A2- 0 948 899
- EP-A2- 1 002 464
- WO-A1-95/32633
- BR-A- 9 301 046
- DE-A1-102005 015 052
- DE-B3-102008 019 038
- DE-U1- 29 808 288
- FR-A1- 2 794 614
- FR-A1- 2 926 956
- RU-C2- 2 185 071
- US-A- 2 682 471
- US-A- 3 769 039

## Description

### Technical field

The present invention relates to a method for manufacturing a confectionery shell having two or more layers by cold-stamping. .

### Background of the Invention

Confections (e.g. pralines) comprising a shell and a filling are commonplace. The shell provides structural rigidity as well as protecting the filling and/or preventing leakage of the filling. The shell is therefore typically made of solidified chocolate. On the other hard, the filling may or may not be solidified.

It is known to manufacture a confectionery shell by depositing shell material into a mould cavity, vibrating the mould to remove air bubbles in the material and inverting the mould to remove excess material ("inversion method"). However, this method suffers from the disadvantage that the excess material must be collected and treated (e.g. re-tempering of chocolate) to avoid wastage. Also, the shell typically does not have a uniform thickness, especially when using a shell material having a relatively high viscosity. This imposes restrictions on the composition (e.g. fat content) of the material.

An improved method for manufacturing a confectionery shell involves immersing a chilled stamp into the shell material in a mould cavity to shape and solidify the material against the wall of the cavity ("cold-stamping"). This produces a shell having a uniform thickness and does not produce as much excess material as the inversion method. Furthermore, cold-stamping is not as dependent on the viscosity of the shell material.

Confectionery shells having a multi-layered structure are also known. The layers of the shell may differ in terms of their composition and/or colour.

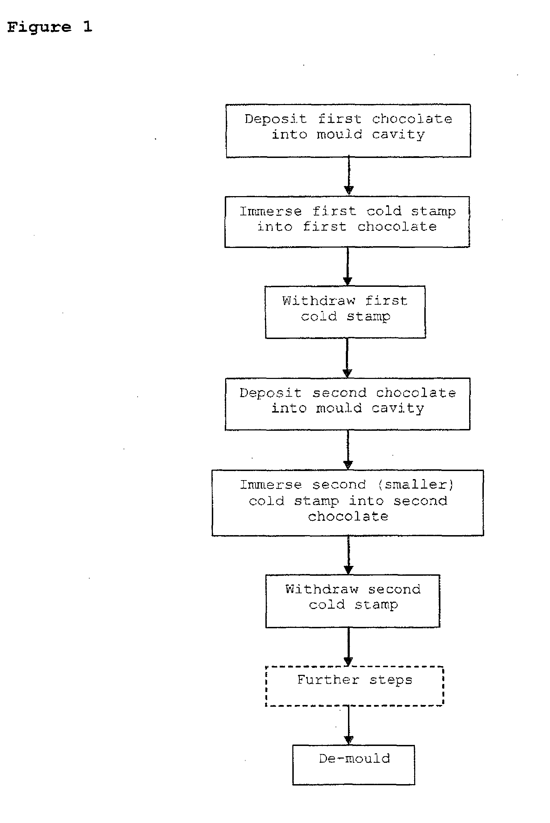

A multi-layered shell may be produced by sequential mould inversion steps. However, the above disadvantages of this method remain. The method is also time-consuming. Alternatively, a multi-layered shell may be produced by cold-stamping. For instance, EP 0 589 820 A1 discloses a method in which a stamp having a temperature of less than 0°C is immersed into a chocolate mass in a mould cavity to solidify the chocolate and form an outer shell layer. A different chocolate mass is subsequently deposited onto the inside of the outer shell layer and a second stamp, which is smaller than the first stamp, is immersed into the chocolate mass to produce an inner shell layer. This method is summarized in Figure 1.

Although multi-layered shell formation by cold-stamping as disclosed in EP 0 589 820 A1 produces substantially uniform shell layers, the method is costly and burdensome in that it requires the use of different stamps in separate cold-stamping steps and repetition of shell-treatment steps (e.g. removal of excess shell material). The method also requires each layer to have a minimum thickness so that it does not adhere to the stamp. Furthermore, in order to bond the shell layers together, it is necessary to heat the outer shell layer after stamping so that it has a liquid outer skin which mixes with the liquid forming the inner shell layer.

A further known method for producing a multi-layered confectionery shell is the "triple-shot" method. This method involves depositing shell and filling materials simultaneously from a nozzle having a central conduit surrounded by two concentric annular conduits. However, this method suffers from the disadvantage that all of the materials must have similar viscosities and crystallizing properties. The method is not therefore suited to producing confections comprising two shell layers having dissimilar compositions or confections having dissimilar filling and shell compositions. It is also not possible to produce confections having complex shapes or confections containing solids (e.g. nuts) using this method.

It is an object of the present invention to provide a method for manufacturing a multi-layered confectionery shell which avoids the above disadvantages associated with known methods.

DE-A-B-10 2008 019038 discloses a method for producing a confectionery shell having a plurality of layers, the method comprising the step of stamping confectionery masses deposited into a mould cavity. Deposition may be such that first and second masses are alternately arranged

on the base of a mould cavity and a third mass is deposited over the first and second masses.

### Summary of the Invention

A first embodiment of the present invention is a method for manufacturing a multi-layered confectionery shell comprising the steps of:
(i) depositing a first edible liquid into a mould cavity,
(ii) depositing at least one other edible liquid onto the first edible liquid in the mould cavity, and
(iii) pressing the edible liquids in the mould cavity using a stamp having a surface temperature below the solidification temperature of each of the liquids to form at least two shell layers;
wherein the ratio of the apparent viscosity of each edible liquid having one or more other edible liquids deposited directly thereon to the apparent viscosity of said other edible liquid(s) is 0.8 or less or 1.5 or more, the viscosities of the liquids being measured at a shear rate of 5 s⁻¹ and at a liquid temperature of 40°C.

This method produces a multi-layered shell having a well-defined layered structure and a uniform thickness using a single cold-stamping step owing to the use of shell-forming liquids having the above ratio of viscosities. This is advantageous in that it reduces set-up and running costs compared to methods which utilise successive cold-stamping steps. Also, delamination of the shell layers is prevented since the layers are partially mixed owing to their simultaneous formation from the respective liquids.

The above method also allows a shell having a reduced thickness to be produced since it is the total thickness of the shell layers, not the thickness of the individual layers, that is decisive for avoiding adherence of the shell to the stamp.

In addition, the above method can be used to avoid contact between the outer layer-forming first liquid (e.g. chocolate) and the stamp, thereby avoiding contamination of the outer layer by substances (e.g. water) on the surface of the stamp. Contamination of chocolate by water causes "sugar blooms" due to dissolution of the chocolate and compromises the taste of the chocolate. Bacterial growth is also increased by contamination of chocolate with water.

### Brief Description of the Drawings

Figure 1: A flow diagram illustrating a known method for manufacturing a multi-layered confectionery shell.
Figure 2: A preferred deposition pattern of the first and second liquids according to the present invention.
Figure 3: A double-layered confectionery shell according to the present invention.
Figure 4: A flow diagram illustrating a preferred method according to the present invention.

### Detailed Description of the Invention

The method of the first embodiment of the present invention is described in detail below.

The method produces a multi-layered confectionery shell. This means that the shell has two or more layers, preferably two layers, adjacent layers differing from one another in some identifiable way. For instance, adjacent layers may differ in terms of their composition and/or colour. Adjacent layers do not, however, necessarily form a distinct boundary; adjacent layers formed by the pressing step are mixed to a certain extent to form a boundary zone, provided that the layers on either side of this zone are distinguishable.

The shell can, for instance, be a shell for a praline, a confectionery tablet or a countline

"Liquid" in the context of the present invention means flowable (i.e. non-solidified). The edible liquids are not particularly limited, provided that they have a viscosity ratio as defined above and form adjacent shell layers which differ from one another in some way. It is though preferred that the first liquid comprises chocolate and at least one of the other liquids comprises chocolate or a (moisture) barrier composition. More preferably, the first liquid is liquid chocolate and at least one of the other liquids is a moisture barrier composition. A liquid moisture barrier composition is most preferably deposited directly onto the first liquid.

"Chocolate" includes plain, dark, milk, white and compound chocolate.

A moisture barrier composition is used to prevent moisture transfer from the confection to the environment or to moisture-sensitive components (e.g. chocolate), especially if the shell is to be filled with a component having a high water activity (e.g. a fresh fruit composition). The moisture barrier composition can be any conventional moisture barrier composition such as a fat-based moisture barrier composition or a heterogeneous moisture barrier composition, both of which contain crystalline fats.

The ratio of the apparent viscosity (apparent viscosity = applied shear stress (Pa) / shear rate (s⁻¹)) of each edible liquid having one or more other edible liquids deposited directly thereon to the apparent viscosity of the other edible liquid(s) (e.g. the ratio (n1/n2) of the viscosity of the first edible liquid (n1) to that of a second edible liquid deposited directly onto the first edible liquid (n2)) is 0.8 or less or 1.5 or more, the viscosities being measured at a shear rate of 5 s⁻¹ and at a liquid temperature of 40°C (±0.1°C).

Preferably the viscosity ratio is 0.2-0.8, more preferably 0.5-0.7. When the viscosity ratio is less than 0.2, the liquids are liable to become mixed towards the rim of the shell upon pressing. When the viscosity ratio is greater than 0.8 (but less than 1.5), the liquids are liable to become mixed at the bottom of the shell (the closed part of the shell at the base of the cavity) and the upper liquid is liable to flow around the lower liquids upon pressing so that the upper liquid is visible on the outside of the shell. Alternatively, it is preferred that the viscosity ratio is 1.5-4.5, more preferably 2.0-3.5. When the viscosity ratio is greater than 4.5, the upper liquid is liable to flow around the lower liquids upon pressing.

In the case of forming a three-layered shell, a second liquid is deposited onto the first liquid and a third liquid is then deposited onto the second liquid. The viscosity of the second liquid is preferably greater than the viscosities of the first and third liquids for optimal layer separation and uniformity, i.e. the ratio (n1/n2) of the viscosity of the first liquid (n1) to that of the second liquid (n2) is 0.8 or less, and the ratio (n2/n3) of the viscosity of the second liquid (n2) to that of the third liquid (n3) is 1.5 or more.

The viscosities of the edible liquids can be adjusted using an emulsifier (e.g. polyglycerol polyricinoleate (PGPR), lecithin or citric acid ester (CAE)) or a fat (e.g. cocoa butter).

The viscosities of the edible liquids may be measured using a conventional apparatus such as a rotational viscometer equipped with a measuring sensor having a particular geometry (e.g. a coaxial cylinder sensor). Such a viscometer measures the shear stress applied to each liquid by the rotating measuring sensor immersed in the liquid at a particular shear rate (5 s⁻¹ in this case). The viscosity of the liquid can be calculated from the applied shear stress and shear rate.

The edible liquids can be treated prior to deposition to ensure that they have adequate flow properties for deposition and stamping, and to ensure that they have optimal solidification properties. For instance, chocolate is preferably tempered using a conventional method so that it contains stable crystals. This causes the chocolate to contract slightly upon contact with the stamp, which allows the stamp to be withdrawn without the shell adhering to the stamp.

The mould cavity may be one of a plurality of cavities. For instance, the mould may be a tray mould consisting of one or more lanes of cavities, the cavities also being arranged into rows (e.g. 2-6 rows). The size and shape of the cavity depends on the type of shell to be produced. It is though preferred that the cavity has a substantially uniform inner surface which corresponds to the shape of the stamp in order to produce shells having a uniform thickness.

The mould cavity may contain sub-cavities. For instance, the cavity may be for producing confections in tablet form, the tablet having blocks which can be broken into manageable pieces.

The edible liquids can be deposited into the mould cavity manually or using a conventional depositor such as a multi-nozzled depositor which deposits liquid into multiple cavities simultaneously. The different edible liquids are preferably deposited from separate nozzles to avoid contamination.

In terms of the pattern of deposition, the first liquid is preferably deposited into the mould cavity to form a liquid layer extending around the wall of the cavity and having a substantially even surface. This can be achieved by vibrating the mould, if necessary. A second liquid is then deposited onto the surface of the first liquid. The second liquid may be deposited so as to partially or completely cover the first liquid. Partial coverage is preferred in order to avoid the second liquid flowing out of the cavity during pressing. This may be achieved by depositing the second liquid in the form of a single spot or a ring.

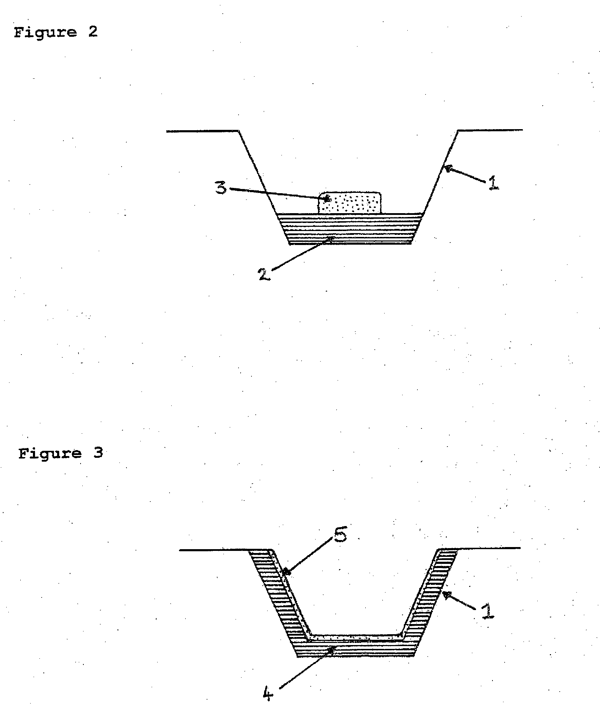

It is particularly preferred that the second liquid is deposited on the first liquid so that the second liquid does not contact the wall of the mould cavity, as illustrated in Figure 2. This means that there is a ring of the first liquid (2) visible all around the second liquid (3) when viewed from above the cavity (1). Such a deposition pattern allows both liquids to be distributed evenly up the cavity wall by the stamp without the second liquid flowing substantially over and around the first liquid at the cavity rim.

In the case of forming a shell having three layers, a third edible liquid is deposited onto the second edible liquid in the mould cavity, preferably in the form of a spot on the centre of the second edible liquid so as not to contact the cavity wall. Further edible liquids may be deposited into the mould cavity in a similar way.

Once the edible liquids have been deposited into the mould cavity, they are pressed using a stamp. A conventional cold-stamping apparatus may be employed to perform this step. Such an apparatus comprises one or more stamps having a pressing surface. The stamps are usually made from a metal such as steel or aluminium. The apparatus also comprises a means for cooling the stamps. Cooling is typically achieved by circulating a cooling liquid through the apparatus between the stamps, the cooling liquid being at a temperature less than the desired temperature of the pressing surface of the stamp.

The stamp is immersed into at least the upper edible liquid, the immersed surface of the stamp having a temperature which is lower than the solidification temperature of this liquid. This ensures that the liquid is at least partially solidified by the stamp. Specifically, the liquid in contact with the stamp is solidified to form an inner "skin" which acts to maintain the shape of the shell when the stamp is withdrawn and provide a barrier to material subsequently filled into the shell. It is not therefore essential that the liquid is fully solidified or the lower liquids are solidified at all during the pressing step. In this case, the liquids can be fully solidified after the pressing step by cooling the entire mould. On the other hand, if it is desired to produce the shell rapidly, the upper liquid may be fully solidified and the other liquids at least partially solidified upon pressing by adjusting the temperature, immersion period and immersion depth of the stamp as appropriate.

The surface temperature of the stamp is dependent upon the solidification temperature of the edible liquids and the immersion period (the period in which the stamp is in contact with the liquid(s)). It is though preferred that the stamp has a surface temperature of less than 10°C, more preferably 0°C or less, and most preferably -25°C to 0°C in order to reduce the immersion period and produce a sufficiently rigid shell.

The immersion period is typically less than 10 seconds, preferably less than 5 seconds and most preferably 1-3 seconds.

The shell may be de-moulded following pressing and cooling. On the other hand, further steps may be performed before de-moulding. For instance, a further shell layer may be formed by cold-stamping or another method. Alternatively, or additionally, the shell may be filled.

Examples of the filling material include chocolate, cream, caramel, toffee, alcohol, fruit and combinations thereof. A finishing layer may be formed on the filling to fully enclose the filling.

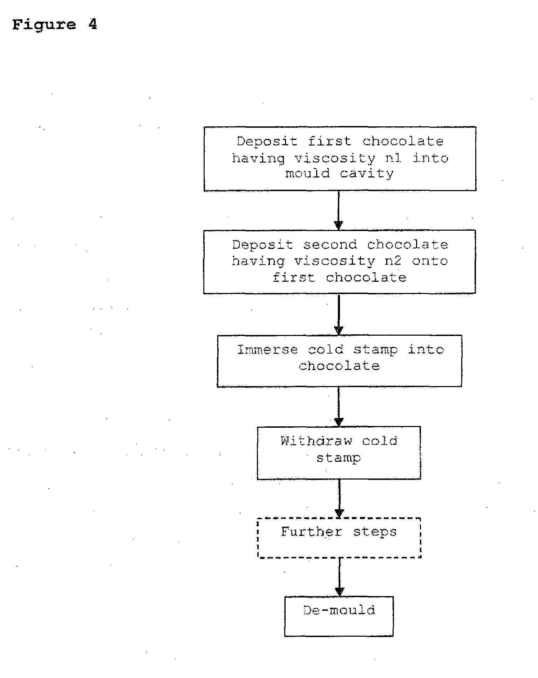

Figure 4 illustrates a preferred method according to the present invention. The method involves the production of a double-layered shell using two types of chocolate (e.g. dark and white chocolate). The ratio of the viscosities of the first and second chocolate (n1 and n2 respectively) is as defined above. The shell may be de-moulded following withdrawal of the stamp. Alternatively, further steps such as described above may be performed prior to de-moulding to produce a finished confection.

The second liquid used in the method illustrated in Figure 4 may be a moisture barrier composition rather than chocolate. This is preferred if the shell is to be filled with a material having a high water activity (e.g. a fresh fruit composition).

The confectionery shell produced by the above method comprises at least two shell layers: an outer shell layer (first shell layer) formed from the first edible liquid and one or more inner shell layers. The shell preferably comprises two or three shell layers, more preferably two layers, which are formed by the pressing step. As illustrated in Figure 3, it is desirable that the outer shell layer (4) completely encloses the bottom and sides of the inner shell layer (5). It is, however, possible for the inner shell layer to be partially exposed through the outer shell layer.

Preferably the confectionery shell has an outer chocolate layer. More preferably, the shell comprises two layers, the outer layer being a chocolate layer and the inner layer comprising a moisture barrier composition.

The total thickness of the shell layers formed by the pressing step is preferably 2,0-5.0 mm, more preferably 2.0-3.0 mm. The thickness of the outer shell layer is preferably 1.0-2.0 mm, and the thickness of each subsequent shell layer is preferably 0.8-2.0 mm. This avoids substantial mixing of the shell layers.

### Examples

The present invention is illustrated by the following Examples.

### Measurement of viscosity

The viscosity of each edible liquid used in the Examples was measured at a shear rate of 5 s⁻¹ and a liquid temperature of 40°C (±0.1°C) using a calibrated Haake VT550 rotational viscometer (manufactured by Thermo Scientific). The viscometer was equipped with an SV1 coaxial cylinder sensor (radius = 10.1 mm; length = 61.4 mm) and a water jacket. This involved the preliminary steps of heating 50 g of the corresponding solid in a dry air-tight container in an oven set at 50°C to form the liquid, transferring the liquid into the cup of the sensor (sample volume = 9 cm³), removing air bubbles in the liquid by vibration, and attaching the cup to the viscometer so that it was surrounded by the water jacket to maintain the temperature of the liquid at 40°C (±0.1°C). The liquid was next pre-sheared at different shear rates (90 s at 10 s⁻¹, 200 s at 40 s⁻¹ and 60 s at 10 s⁻¹) to ensure a uniform temperature distribution and remove any remaining air bubbles. The shear stress applied to the liquid at a shear rate of 5 s⁻¹ was then measured over a period of 18 s, all the while maintaining a liquid-filled gap of 1.45 mm between the rotating cylinder and the inner wall of the cup and ensuring that the liquid did not completely cover the cylinder.

### Example 1

PGPR 4150 (manufactured by Palsgaard^{®}) was added to tempered Milka^{®} White chocolate (manufactured by Kraft Foods) having a blue colour in an amount of 0.20 mass% (based on the mass of the chocolate) to produce a first liquid. The first liquid had a viscosity of 4.5 Pa.s.

3.24 g (± 0.1 g) of the first liquid was manually deposited at 29°C into four cavities of a Brunner^{®} praline mould having a cavity volume of 10.8 cm³. The cavities were pre-warmed to 30°C.

The mould was vibrated manually to even the surface of the first liquid in the cavities. Subsequently, 2.26 g (± 0.1 g) of tempered Milka^{®} white chocolate containing no added PGPR (second liquid) was manually deposited onto the centre of the first liquid in each cavity in the form of a spot having no contact with the cavity wall. The second liquid had a viscosity of 13.4 Pa.s.

The first and second liquids were pressed in the cavities using a Knobel ColdPress^{®} unit (type 07-KCM-09). The stamps had a lower surface measuring 2.6 mm by 2.6 mm, and the surface temperature of the stamps was -10°C. The speed of the stamps between the starting position and the final position in the cavities was set at 50 mm.s⁻¹, and the immersion period was set at 5 seconds. The thus-formed first and second shell layers had a total thickness of 2.6 mm.

The shells were stored at 25°C for 5 minutes and excess material extending outside the cavity was scraped away. The shells were then stored at 4°C for a further 30 minutes and de-moulded.

### Examples 2-5

Confectionery shells were produced in the same manner as in Example 1, except that the viscosity ratio of the liquids was altered using PGPR, as shown in Table 1.

### Examples 6-15 and Comparative Examples 1 and 2

Confectionery shells were produced in the same manner as in Example 1, except that tempered Milka^{®} White chocolate was used as the first liquid and tempered Milka^{®} White chocolate having a blue colour was used as the second liquid. One of the viscosity ratio, the dosing pattern of the second liquid, the immersion period and the stamping speed was also altered, as shown in Table 1.

### Comparative Example 3

Confectionery shells were produced using a "one-shot" apparatus, whereby tempered Milka^{®} White chocolate and tempered Milka^{®} White chocolate having a blue colour were deposited simultaneously into the mould cavities from separate conduits of a single nozzle. The liquids were then pressed and further treated as in Example 1.

### Example 16

PGPR 4150 (manufactured by Palsgaard^{®} was added to tempered Milka^{®} chocolate (manufactured by Kraft Foods) in an amount of 0.50 mass% (based on the mass of the chocolate) to produce a first liquid. The first liquid had a viscosity of 1.8 Pa.s.

3.00 g (± 0.1 g) of the first liquid was manually deposited at 29°C into four cavities of a Brunner^{®} praline mould having a cavity volume of 10.8 cm³. The cavities were pre-warmed to 30°C.

The mould was vibrated manually to even the surface of the first liquid in the cavities. Subsequently, 3.00 g (± 0.1 g) of tempered "CCOCD" dark chocolate (second liquid) was manually deposited onto the centre of the first liquid in each cavity in the form of a spot having no contact with the cavity wall. The second liquid had a viscosity of 7.7 Pa.s. 2.00 g (± 0.1 g) of a tempered liquid moisture barrier composition (third liquid) having a viscosity of 2.5 Pa.s was then deposited onto the CCOCD.

The three liquids were pressed using a Knobel ColdPress^{®} unit (type 07-KCM-09) in the manner described in Example 1 to form shells having three layers and a total thickness of 2.6 mm.

The shells were stored at 25°C for 5 minutes and excess material extending outside the cavity was scraped away.

The shells were then stored at 10°C for a further 30 minutes and de-moulded.

### Examples 17 & 18 and Comparative Example 4

Confectionery shells were produced in the same manner as in Example 16, except that the order of the layers was altered, as shown in Table 1.

**Table 1**

| **Example/ Comp. Example** | **Viscosity (Pa.s)** | | | **Viscosity ratio** | | **Dosing pattern** | **Immersion period (s)** | **Stamping speed (mm.s⁻¹)** |
|---|---|---|---|---|---|---|---|---|
| | **First liquid (n1)** | **Second liquid (n2)** | **Third liquid (n3)** | **(n1/ n2)** | **(n2/ n3)** | | | |
| Ex. 1 | 4.5 | 13.4 | N/A | 0.3 | N/A | Spot | 5 | 50 |
| Ex. 2 | 6.1 | 13.4 | N/A | 0.5 | N/A | spot | 5 | 50 |
| Ex. 3 | 8.0 | 13.4 | N/A | 0.6 | N/A | Spot | 5 | 50 |
| Ex. 4 | 9.5 | 13.4 | N/A | 0.7 | N/A | Spot | 5 | 50 |
| Ex. 5 | 10.4 | 13.4 | N/A | 0.8 | N/A | Spot | 5 | 50 |
| Ex. 6 | 13.4 | 8.0 | N/A | 1.7 | N/A | Spot | 5 | 50 |
| Ex. 7 | 13.4 | 6.1 | N/A | 2.2 | N/A | Spot | 5 | 50 |
| Ex. 8 | 13.4 | 4.5 | N/A | 3.0 | N/A | Spot | 5 | 50 |
| Ex. 9 | 13.4 | 3.8 | N/A | 3.5 | N/A | Spot | 5 | 50 |
| Comp. Ex. 1 | 13.4 | 10.4 | N/A | 1.3 | N/A | Spot | 5 | 50 |
| Comp. Ex. 2 | 13.4 | 9.5 | N/A | 1.4 | N/A | Spot | 5 | 50 |
| Ex. 10 | 13.4 | 4.5 | N/A | 3.0 | N/A | Spot | 8 | 50 |
| Ex. 11 | 13.4 | 4.5 | N/A | 3.0 | N/A | Spot | 3 | 50 |
| Ex. 12 | 13.4 | 4.5 | N/A | 3.0 | N/A | Spot | 5 | 30 |
| Ex. 13 | 13.4 | 4.5 | N/A | 3.0 | N/A | Spot | 5 | 90 |
| Ex. 14 | 13.4 | 4.5 | N/A | 3.0 | N/A | Ring | 5 | 50 |
| Ex. 15 | 13.4 | 4.5 | N/A | 3.0 | N/A | Spiral | 5 | 50 |
| Comp. Ex. 3 | 13.4 | 4.5 | N/A | 3.0 | N/A | One-shot | 5 | 50 |
| Ex. 16 | 1.8 | 7.7 | 2.5 | 0.2 | 3.1 | Spot | 5 | 50 |
| Ex. 17 | 2.5 | 7.7 | 1.8 | 0.3 | 4.3 | Spot | 5 | 50 |
| Ex. 18 | 7.7 | 1.8 | 2.5 | 4.3 | 0.7 | Spot | 5 | 50 |
| Comp. Ex. 4 | 7.7 | 2.5 | 1.8 | 3.1 | 1.4 | Spot | 5 | 50 |

The state of the shells was observed. The results are summarized in Table 2. "Clear separation of layers" means that there is no mixing of the layers in question other than an inevitable small degree of mixing caused by the pressing step.

**Table 2**

| **Example** | **Observations** |
|---|---|
| Ex. 1 | Clear separation of layers at the shell bottom; moderate mixing of layers near the shell rim. |
| Ex. 2 | Clear separation of layers at the shell bottom; slight mixing of layers near the shell rim. |
| Ex. 3 | Clear separation of layers at the shell bottom; second layer extended slightly around the first layer at the shell rim. |
| Ex. 4 | Slight mixing of layers at the shell bottom; second layer extended slightly around the first layer at the shell rim. |
| Ex. 5 | Moderate mixing of layers at the shell bottom; second layer extended slightly around the first layer at the shell rim. |
| Ex. 6 | Moderate mixing of layers at the shell bottom; second layer extended slightly around the first layer at the shell rim. |
| Ex. 7 | Clear separation of layers at the shell bottom; second layer extended slightly around the first layer at the shell rim. |
| Ex. 8 | Clear separation of layers at the shell bottom; second layer not extended around the first layer at the shell rim. |
| Ex. 9 | Clear separation of layers at the shell bottom; second layer extended slightly around the first layer at the shell rim. |
| Comp. Ex. 1 | Severe mixing of layers at the shell bottom; second layer extended around the first layer at the shell rim. |
| Comp. Ex. 2 | Severe mixing of layers at the shell, bottom; second layer extended around the first layer at the shell rim. |
| Ex. 10 | Clear separation of layers at the shell bottom; second layer extended slightly around the first layer at the shell rim. |
| Ex. 11 | Clear separation of layers at the shell bottom; second layer extended slightly around the first layer at the shell rim. |
| Ex. 12 | Clear separation of layers at the shell bottom; second layer extended slightly around the first layer at the shell rim. |
| Ex. 13 | Clear separation of layers at the shell bottom; second layer extended slightly around the first layer at the shell rim. |
| Ex. 14 | Clear separation of layers at the shell bottom; second layer extended slightly around the first layer at the shell rim. |
| Ex. 15 | CLear separation of layers at the shell bottom; moderate mixing of layers near the shell rim. |
| Comp. Ex. 3 | Severe mixing of layers throughout the shell. |
| Ex. 16 | Clear separation of layers. |
| Ex. 17 | Slight mixing of first and second layers at the shell bottom. |
| Ex. 18 | Third layer extended slightly around the first and second layers at the shell rim; slight mixing of first and third layers. |
| Comp. Ex. 4 | Severe mixing of first and second layers; third layer extended around the first and second layers at the shell rim. |

It is evident from the Examples and Comparative Examples that the method of the present invention produces a multi-layered confectionery shell having a well-defined layered structure as compared to a shell produced from liquids having a viscosity ratio outside the ranges defined above and a shell produced by simultaneous deposition of the liquids using a one-shot method.

## Claims

1. A method for manufacturing a multi-layered confectionery shell comprising the steps of:
(i) depositing a first edible liquid into a mould cavity,
(ii) depositing at least one other edible liquid onto the first edible liquid in the mould cavity, and
(iii) pressing the edible liquids in the mould cavity using a stamp having a surface temperature below the solidification temperature of each of the edible liquids to form at least two shell layers;
wherein the ratio of the apparent viscosity of each edible liquid having one or more other edible liquids deposited directly thereon to the apparent viscosity of said other edible liquid(s) is 0.8 or less or 1.5 or more, the viscosities of the liquids being measured at a shear rate of 5 s⁻¹ and at a liquid temperature of 40°C.

2. A method according to Claim 1, wherein the ratio of the apparent viscosity of each edible liquid having one or more other edible liquids deposited directly thereon to the apparent viscosity of said other edible liquid(s) is 0.5-0.7 or 2.0-3.5.

3. A method according to Claim 1, wherein a second edible liquid is deposited onto the first edible liquid in step (ii), and the first and second edible liquids are pressed in step (iii) to form a shell consisting of two layers.

4. A method according to Claim 3, wherein the ratio of the apparent viscosity of the first edible liquid to that of the second edible liquid is 0.5-0.7.

5. A method according to Claim 3, wherein the ratio of the apparent viscosity of the first edible liquid to that of the second edible liquid is 2.0-3.5.

6. A method according to any preceding claim, wherein each edible liquid deposited on the first edible liquid does not contact the wall of the mould cavity.

7. A method according to any preceding claim, wherein the first edible liquid is liquid chocolate and a liquid moisture barrier composition is deposited directly onto the first edible liquid in step (ii).

8. A method according to any preceding claim, wherein the total thickness of the shell layers after pressing the edible liquids is 2.0-3.0 mm.

## Patentansprüche

1. Verfahren zur Herstellung einer mehrschichtigen Konfektschale, das die Schritte umfasst:
(i) Ablegen einer ersten verzehrbaren Flüssigkeit in einem Formhohlraum,
(ii) Ablegen zumindest einer anderen verzehrbaren Flüssigkeit auf der ersten verzehrbaren Flüssigkeit in dem Formhohlraum, und
(iii) Pressen der verzehrbaren Flüssigkeiten in dem Formholraum unter Verwendung eines Stempels, der eine Oberflächentemperatur unter der Erstarrungstemperatur von jeder der verzehrbaren Flüssigkeiten aufweist, um zumindest zwei Schalenschichten zu bilden;
worin das Verhältnis der scheinbaren Viskosität von jeder verzehrbaren Flüssigkeit, die ein oder mehr andere verzehrbare Flüssigkeiten aufweist, die direkt darauf abgelegt sind, zu der scheinbaren Viskosität von der/den anderen verzehrbaren Flüssigkeit(en) 0,8 oder weniger oder 1,5 oder mehr beträgt, wobei die Viskositäten der Flüssigkeiten bei einer Scherrate von 5 s⁻¹ und bei einer Flüssigkeitstemperatur von 40°C gemessen werden.

2. Verfahren gemäß Anspruch 1, worin das Verhältnis der scheinbaren Viskosität von jeder verzehrbaren Flüssigkeit, die eine oder mehrere andere verzehrbare Flüssigkeiten aufweist, die direkt darauf abgelegt sind, zu der scheinbaren Viskosität von der/den anderen verzehrbaren Flüssigkeit(en) 0,5 bis 0,7 oder 2,0 bis 3,5 beträgt.

3. Verfahren gemäß Anspruch 1, worin eine zweite verzehrbare Flüssigkeit auf der ersten verzehrbaren Flüssigkeit in Schritt (ii) abgelegt wird, und die erste und zweite verzehrbare Flüssigkeit in Schritt (iii) gepresst werden, um eine Schale zu bilden, die aus zwei Schichten besteht.

4. Verfahren gemäß Anspruch 3, worin das Verhältnis der scheinbaren Viskosität von der ersten verzehrbaren Flüssigkeit zu der der zweiten verzehrbaren Flüssigkeit 0,5 bis 0,7 beträgt.

5. Verfahren gemäß Anspruch 3, worin das Verhältnis der scheinbaren Viskosität von der ersten verzehrbaren Flüssigkeit zu der der zweiten verzehrbaren Flüssigkeit 2,0 bis 3,5 beträgt.

6. Verfahren gemäß einem beliebigen vorhergehenden Anspruch, worin jede verzehrbare Flüssigkeit, die auf der ersten verzehrbaren Flüssigkeit abgelegt ist, nicht die Wand des Formhohlraums berührt.

7. Verfahren gemäß einem beliebigen vorhergehenden Anspruch, worin die erste verzehrbare Flüssigkeit flüssige Schokolade ist, und eine flüssige Zusammensetzung für eine Feuchtigkeitssperre direkt auf der ersten verzehrbaren Flüssigkeit in Schritt (ii) abgelegt wird.

8. Verfahren gemäß einem beliebigen vorhergehenden Anspruch, worin die gesamte Dicke der Schalenschichten nach dem Pressen der verzehrbaren Flüssigkeiten 2,0 bis 3,0 mm beträgt.

## Revendications

1. Procédé de fabrication d'une coque de confiserie multicouche comprenant les étapes consistant à :
(i) déposer un premier liquide comestible dans une cavité de moule,
(ii) déposer au moins un autre liquide comestible sur le premier liquide comestible dans la cavité de moule, et
(iii) presser les liquides comestibles dans la cavité de moule en utilisant une matrice ayant une température de surface inférieure à la température de solidification de chacun des liquides comestibles pour former au moins deux couches de coque ;
le rapport de la viscosité apparente de chaque liquide comestible, comportant un ou plusieurs autres liquides comestibles déposés directement sur lui, à la viscosité apparente dudit ou desdits autres liquides comestibles étant inférieur ou égal à 0,8 ou supérieur ou égal à 1, 5, les viscosités des liquides étant mesurées à un taux de cisaillement de 5 s⁻¹ et à une température de liquide de 40°C.

2. Procédé selon la revendication 1, dans lequel le rapport de la viscosité apparente de chaque liquide comestible, comportant un ou plusieurs autres liquides comestibles déposés directement sur lui, à la viscosité apparente dudit ou desdits autres liquides comestibles est dans la plage de 0,5 à 0,7 ou 2,0 à 3,5.

3. Procédé selon la revendication 1, dans lequel un deuxième liquide comestible est déposé sur le premier liquide comestible à l'étape (ii), et les premier et deuxième liquides comestibles sont pressés à l'étape (iii) pour former une coque consistant en deux couches.

4. Procédé selon la revendication 3, dans lequel le rapport de la viscosité apparente du premier liquide comestible à celle du deuxième liquide comestible est dans la plage de 0,5 à 0,7.

5. Procédé selon la revendication 3, dans lequel le rapport de la viscosité apparente du premier liquide comestible à celle du deuxième liquide comestible est dans la plage de 2,0 à 3,5.

6. Procédé selon l'une quelconque des revendications précédentes, dans lequel chaque liquide comestible déposé sur le premier liquide comestible n'entre pas en contact avec la paroi de la cavité de moule.

7. Procédé selon l'une quelconque des revendications précédentes, dans lequel le premier liquide comestible est du chocolat liquide et une composition formant barrière à l'humidité liquide est déposée directement sur le premier liquide comestible à l'étape (ii).

8. Procédé selon l'une quelconque des revendications précédentes, dans lequel l'épaisseur totale des couches de coque après avoir pressé les liquides comestibles est dans la plage de 2,0 à 3,0 mm.
